# EUROPÄISCHE PATENTSCHRIFT

(11) **EP 4 408 640 B1**
(45) Veröffentlichungstag und Bekanntmachung des Hinweises auf die Patenterteilung: **18.02.2026**
(21) Anmeldenummer: 22798248.5
(22) Anmeldetag: 28.09.2022
(51) Int. Cl.: B29C 49/48, B29C 49/06, B29K 67/00, B29L 31/00, B29C 49/36

(54) **BLASFORM, BODENFORM UND BLASMASCHINE**
BLOW MOULD, BASE MOULD AND BLOW-MOULDING MACHINE
MOULE DE SOUFFLAGE, MOULE DE FOND ET MACHINE DE SOUFFLAGE

(30) Priorität: 28.09.2021 DE 102021125151
(43) Veröffentlichungstag der Anmeldung: 07.08.2024
(73) Patentinhaber: KHS GmbH, 44143 Dortmund (DE)
(72) Erfinder: BAUMGARTE, Rolf, 22926 Ahrensburg (DE); NAGEL, Henrik, 24558 Henstedt Ulzburg (DE); WEIRICH, Dominik, 55543 Bad Kreuznach (DE); HAUBENSCHILD, Jens, 22397 Hamburg (DE); RÜCHEL, Matthias, 21031 Hamburg (DE); KRUSE, Matthias, 22525 Hamburg (DE)
(74) Vertreter: Eisenführ Speiser
(86) Internationale Anmeldenummer: PCT/EP2022/076896
(87) Internationale Veröffentlichungsnummer: WO 2023/052381

(56) Entgegenhaltungen:
- EP-A1- 3 880 432
- DE-A1- 19 925 756
- US-A- 5 411 699
- US-A1- 2016 325 483

## Beschreibung

Die Erfindung betrifft eine Blasform zum Herstellen von Behältern in einem Blas- oder Streckblasprozess mit einer Bodenform sowie zwei Formhälften, die gemeinsam eine Formkontur für den Behälter vorgeben, wobei die Bodenform eine Formfläche zum Vorgeben eines Abschnitts der Formkontur sowie ein Leitungssystem für ein Kühlfluid zum Kühlen der Formfläche umfasst, wobei das Leitungssystem einen Zentralkanal zum Zuführen des Kühlfluids, mehrere vom Zentralkanal abzweigende primäre Kühlkanäle, die in der Nähe der Formfläche vom Zentralkanal aus nach radial außen verlaufen, sowie einen mit den primären Kühlkanälen in Strömungsverbindung stehenden Sammelkanal zum Sammeln und Abführung des Kühlfluids aufweist.

Die Erfindung betrifft des Weiteren eine Bodenform für eine Blasform sowie eine Blasmaschine mit einer Blasform.

Eine gattungsgemäße Blasform aus dem Stand der Technik ist beispielsweise in DE 199 25 756 A1 gezeigt. Über einen Zentralkanal wird Kühlfluid zugeführt, das dann über sternförmig angeordnete primäre Kühlkanäle entlang der zu kühlenden Formfläche verteilt, am Ende der primären Kühlkanäle mittels Ableitkanäle von der zu kühlenden Formfläche weggeleitet und in einem Ringkanal gesammelt wird. Auch die US 5,411,699 A, die WO 2020/099755 A1 und die US 2016/0325483 A1 offenbaren aktiv gekühlte Blasformen mit Bodenformen.

Bekannte Blasformen der gattungsbildenden Art werden insbesondere bei Hochleistungsblasmaschinen oder Hochleistungsstreckblasmaschinen eingesetzt, die nach dem Rundläuferprinzip konstruiert sind. Derartige Maschinen weisen in der Regel ein umlaufendes Blasrad auf, auf dem die Blasformen angeordnet sind. Ebenfalls bekannt sind Taktmaschinen, bei denen die Blasform stationär angeordnet ist, wobei Rundläufer in der Regel höhere Produktionsraten, d.h. beispielsweise mehr Behälter pro Blasform in derselben Zeit, erlauben als Taktmaschinen.

Moderne Maschinen zur Behälterherstellung, insbesondere für Getränkebehälter, verwenden oftmals einen zweistufigen Prozesse, bei denen vorgefertigte Behälterrohlinge als Halbzeuge zugeführt werden, die dann geeignet temperiert, in eine Blasform eingelegt und in die gewünschten Behälter umgeformt werden.

Einstufige Prozesse, bei denen Kunststoffrohmaterial aufgeschmolzen, zu einem Rohling geformt und dann ohne zwischenzeitliches Abkühlen und Lagern direkt zu den gewünschten Behältern geformt werden, sind ebenfalls bekannt, erreichen jedoch nicht die Produktionsraten des zweistufigen Prozesses.

Nachgeordnete Behandlungen der Behälter wie Füllen und/oder Etikettieren setzen die fertigen Behälter oftmals unter Druck. Hierfür ist es unerlässlich, dass die Behälter ausreichend stabil sind, was insbesondere eine ausreichende Abkühlung des heißen Materials nach dem Ausformen voraussetzt. Früher war dies kein Problem, da Behälterherstellung und nachgeordnete Behandlung in unterschiedlichen Maschinen erfolgte, zwischen denen die Behälter über längere Förderstrecken ausgetauscht wurden, bei denen ausreichend Zeit zum vollständigen Auskühlen blieb.

Mittlerweile ist es üblich geworden, Behälterherstellung und nachfolgende Behandlung wie Befüllen und/oder Etikettieren in derselben Maschine durchzuführen, wodurch die zwischenliegenden Förderstrecken entfallen und die Zeit zum Auskühlen der Behälter drastisch reduziert wird. Gleichzeitig wurde in der Vergangenheit die Produktionsrate derart erhöht, dass die Verweildauer der Behälter in der Blasform nicht mehr ausreicht, um trotz aktiver Kühlung der Formen ausreichend Restwärme aus den Behältern abzuführen.

Bei bestimmten Anwendungen, insbesondere im Zusammenhang mit karbonisierten Getränken, ist es daher erforderlich, spezielle Kühlungen vorzusehen, um insbesondere die Böden der Behälter ausreichend zu stabilisieren. Diese Kühlungen sind jedoch konstruktiv aufwendig, oftmals ineffizient und haben Auswirkungen auf die nachfolgende Behälterbehandlung, die teilweise weitere aufwendige Maßnahmen, wie beispielsweise Trocknung nach Kühlung mit Flüssigkeiten, erfordern.

Der Erfindung liegt die Aufgabe zugrunde, die Produktionsrate von Behältern gegenüber bekannten Lösungen zu erhöhen und/oder die Notwendigkeit zur Nachkühlung hergestellter Behälter vor weiterer Behandlung zu reduzieren.

Die Aufgabe wird erfindungsgemäß gelöst durch eine Blasform der eingangs genannten gattungsbildenden Art, die dadurch weitergebildet ist, dass das Leitungssystem ferner mehrere sekundäre Kühlkanäle aufweist, die in Strömungsrichtung des Kühlfluids zwischen den primären Kühlkanälen und dem Sammelkanal angeordnet sind und in der Nähe der Formfläche nach radial innen verlaufen.

Im Rahmen der Erfindung ist der Begriff radial dahingehend zu verstehen, dass radial innen näher am geometrischen Zentrum bedeutet als radial außen. Die erfindungsgemäß nach radial innen bzw. radial außen verlaufenden Kühlkanäle müssen im Rahmen der Erfindung insbesondere nicht exakt auf das geometrische Zentrum ausgerichtet sein, sondern können durchaus dazu versetzt verlaufen.

Die erfindungsgemäßen sekundären Kühlkanäle zeichnen sich insbesondere dadurch aus, dass das Kühlfluid nach der Passage der primären Kühlkanäle ein weiteres Mal an der zu kühlenden Formfläche vorbeigeführt wird, bevor es im Sammelkanal zusammengeführt und aus der Form geleitet wird. Die Rückführung des Kühlfluides von den sekundären Kühlkanälen zum Sammelkanal kann dabei wie im Stand der Technik über geeignete Rückführ- oder Abführkanäle erfolgen, die das Kühlfluid von der zu kühlenden Formfläche weg zum Sammelkanal führen.

Durch die erfindungsgemäßen sekundären Kühlkanäle wird insbesondere die Oberfläche des Kühlsystems erhöht und dadurch ein besserer Wärmeübergang zwischen dem Material der Bodenform und dem Kühlfluid erreicht. Dadurch kann in derselben Zeit eine höhere Wärmemenge aus der Bodenform über das Kühlfluid abgeführt werden.

Ein weiterer positiver Effekt der Erfindung besteht darin, dass der besonders kritische Zentralbereich der Bodenform, in der durch die dort in der Regel höhere Materialstärke des Behälters besonders viel Abwärme abgeführt werden muss, zweimal vom Kühlfluid passiert wird, nämlich zum Einen bei Durchströmen der primären Kühlkanäle und zum Anderen beim Durchströmen der sekundären Kühlkanäle.

Bei einer Ausführungsform der Erfindung weist die Bodenform einen ringförmigen Verbindungskanal auf, in den die primären Kühlkanäle münden und von dem die sekundären Kühlkanäle abzweigen.

Bei einer alternativen Ausführungsform der Erfindung weist die Bodenform mehrere Verbindungskanäle auf, wobei jeweils ein Verbindungskanal einen primären Kühlkanal mit jeweils einem sekundären Kühlkanal verbindet.

Vorteilhafterweise wird der Verbindungskanal bzw. werden die Verbindungskanäle jeweils durch eine Aussparung in einem Grundkörper der Bodenform gebildet, wobei die Aussparung bzw. die Aussparungen mittels einer über den Grundkörper übergeschobene und gegen den Grundkörper abgedichtete Hülse abgedeckt ist bzw. sind. Die Aussparungen sind dabei beispielsweise durch Drehen oder Fräsen einfach herzustellen.

Besonders vorteilhaft ist, wenn ein Material der Hülse einen Kunststoff umfasst. Dadurch wird die Wärmeleitfähigkeit der Hülse gegenüber einer Ausführung aus Metall herabgesetzt, so dass auf der dem Verbindungskanal abgewandte Außenfläche der Hülse weniger Kondensation auftritt.

Vorteilhaft ist es ebenfalls, wenn die Einmündungen der primären Kühlkanäle in den Verbindungskanal bzw. die Verbindungskanäle gegenüber den Abzweigungen der sekundären Kühlkanäle von dem Verbindungskanal bzw. den Verbindungskanälen in der Höhe und/oder in Umfangsrichtung versetzt angeordnet sind. dadurch wird ermöglicht, die Bodenform gleichmäßig mit Kühlkanälen zu durchsetzen. Dadurch ergeben sich vorteilhaft kurze Diffusionslängen innerhalb der Bodenform, so dass insgesamt mehr Abwärme schneller mit dem Kühlfluid in Kontakt kommt und abgeführt werden kann.

Ein weiterer Vorteil besteht darin, dass die Anordnung der Kühlkanäle an die Geometrie der Formfläche angepasst werden kann, so dass auch bei komplexer Kontur der Formfläche ein gleichmäßiger Abstand zwischen der Formoberfläche und den Kühlkanälen ermöglicht ist.

Die Formfläche ist beispielsweise für einen häufig verwendeten Petaloidboden einer Getränkeflasche ausgelegt und weist somit eine Kontur mit fünf Spannbändern auf, die im Wesentlichen auf einer Halbkugel angeordnet sind und zwischen denen jeweils Standfüße über die idealisierte Halbkugel hinausragen. Hierfür weist eine erfindungsgemäße Bodenform beispielsweise fünf primäre Kühlkanäle, die etwa waagerecht jeweils im Bereich der Kontur für einen der Standfüße verlaufen, sowie fünf sekundäre Kühlkanäle auf, die schräg jeweils im Bereich der Kontur für eines der Spannbänder angeordnet sind.

Die der Erfindung zugrundeliegende Aufgabe wird auch gelöst durch eine Blasform der eingangs genannten gattungsbildenden Art, die dadurch weitergebildet ist, dass an dem der Formfläche zugewandten Ende des Zentralkanals ein Drallkörper mit einer strömungsverändernden Oberfläche angeordnet ist. Diese Ausführungsform der Erfindung mit einem Drallkörper hat dabei eigenständigen erfinderischen Charakter und kann im Rahmen der Erfindung isoliert eingesetzt werden, ist jedoch zur weiteren Verbesserung der Bodenformkühlung auch mit den diskutierten Aspekten der Erfindung kombinierbar.

Durch die strömungsverändernde Oberfläche des Drallkörpers ergibt sich wiederum der grundsätzliche Erfindungsgedanke, die Oberfläche des Kühlsystems zu erhöhen und somit den Wärmeaustausch zwischen dem Material der Bodenform sowie dem Kühlfluid zu verbessern, insbesondere zu beschleunigen.

Gleichzeitig ermöglicht es der Drallkörper durch eine geeignete Wahl der Oberflächenkontur, die Strömung des Kühlfluids innerhalb der Kanäle des Kühlsystems gezielt zu beeinflussen und so beispielsweise die Schergeschwindigkeit der Strömung zu erhöhen. Dadurch wird die von der Bodenform aufgenommene Wärmeenergie schneller innerhalb des Kühlfluids verteilt, so dass insgesamt der Wärmeaustausch zwischen Bodenform und Kühlfluid weiter verbessert wird.

Eine besonders geeignete strömungsverändernde Oberflächenkontur ist dabei spiralförmig oder labyrinthartig ausgebildet.

Bevorzugt weist die Bodenform einen Grundkörper auf, in den der Drallkörper eingearbeitet oder eingesetzt ist. Da der Drallkörper in der Regel größer ist als der Durchmesser der Zentralbohrung, ist es dabei aus Fertigungssicht vorteilhaft, wenn darüber hinaus der Zentralkanal in einem in den Grundkörper wenigstens abschnittsweise formkomplementär eingepassten Einsatz ausgebildet ist, wobei eine Stirnseite des Einsatzes mindestens so groß ist wie der Drallkörper.

Die der Erfindung zugrundeliegende Aufgabe wird auch gelöst durch eine Bodenform für eine erfindungsgemäße Blasform.

Die der Erfindung zugrundeliegende Aufgabe wird ferner gelöst durch eine Blasmaschine, insbesondere Streckblasmaschine, mit wenigstens einer erfindungsgemäßen Blasform. Das volle Potenzial der Erfindung wird erreicht, wenn die Blasmaschine als Rundläufermaschine konstruiert ist und ein umlaufendes Blasrad aufweist, auf dem die wenigstens eine Blasform angeordnet ist.

Die Erfindung wird nachfolgend anhand eines Ausführungsbeispiels der Erfindung näher erläutert, das in der Zeichnung dargestellt ist. Es zeigen
- Figur 1: schematisch eine Blasmaschine gemäß der Erfindung;
- Figur 2a: schematisch eine Blasform gemäß der Erfindung in geöffneter Konfiguration;
- Figur 2b: schematisch die erfindungsgemäße Blasform aus Fig. 2a in geschlossener Konfiguration;
- Figur 3: schematisch eine erste Ausführungsform einer Bodenform gemäß der Erfindung;
- Figur 4a: schematisch eine zweite Ausführungsform einer Bodenform gemäß der Erfindung und
- Figur 4b: schematisch eine Schnittdarstellung der erfindungsgemäßen Bodenform aus Fig. 4a.

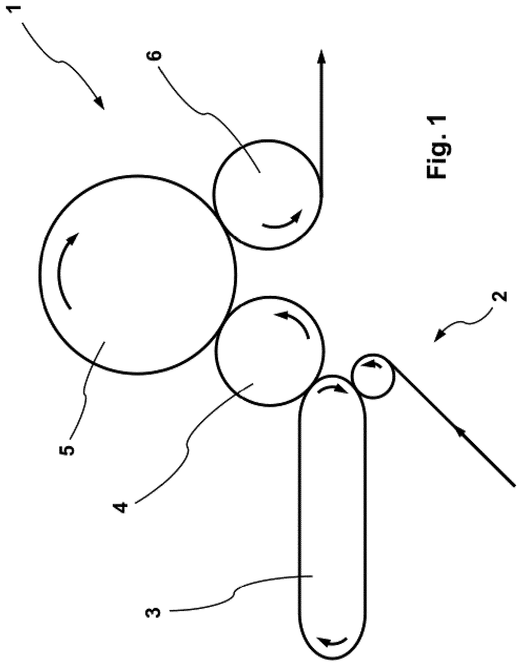

Eine erfindungsgemäße Blasmaschine 1, die insbesondere als Streckblasmaschine ausgebildet sein kann, ist in Fig. 1 dargestellt. Die beispielhafte Blasmaschine 1 ist nach dem Rundläuferprinzip konstruiert und basiert auf einem zweistufigen Herstellungsprozess für Kunststoffbehälter, bei dem in einer ersten Stufe Kunststoffrohstoffe aufgeschmolzen und, beispielsweise mittels Spritzgießen, zu Behälterrohlingen oder Vorformlingen verarbeitet werden. Die erfindungsgemäße Blasmaschine 1 setzt lediglich die zweite Stufe des Herstellungsprozesses um, bei der die Vorformlinge zu Behältern umgeformt werden.

Hierfür werden die vorgefertigt zugeführten Vorformlinge in einer Eingabestation 2 sortiert, ausgerichtet, zu einer kontinuierlichen Reihe angeordnet und schließlich vereinzelt. In einer Heizvorrichtung 3 werden die Vorformlinge thermisch auf die Umformung vorbereitet und mittels einer Transfereinrichtung 4 an eine Blasstation auf einem Blasrad 5 übergeben. Während eines Umlaufs der Blasstation auf dem Blasrad 5 wird der thermisch geeignet konditionierte Vorformling in einen Behälter umgeformt, der dann wiederum mittels einer weiteren Transfereinrichtung 6 aus der Blasstation entnommen wird. Die derart hergestellten Behälter verlassen die Blasmaschine 1 wiederum als kontinuierlicher Strom, der der weiteren Bahandlung, beispielsweise Füllen und/oder Etikettieren, zugeführt werden kann.

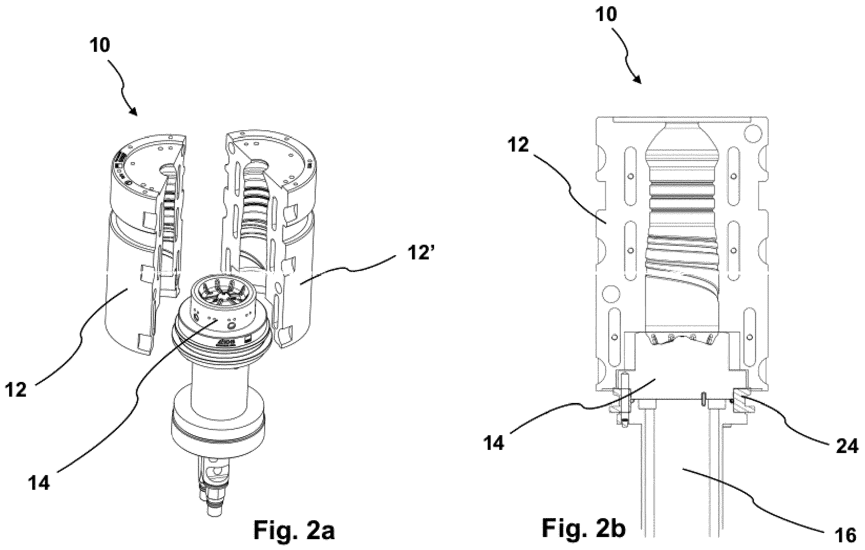

Jede Blasstation auf dem Blasrad 5 weist eine Blasform 10 auf, die schematisch geöffnet in Fig. 2a und in Fig. 2b dargestellt ist. Die Blasform 10 umfasst zwei Blasformhälften 12, 12' sowie eine Bodenform 14. Zum Eingeben eines Vorformlings sowie zum Entnehmen eines Behälters wird die Blasform geöffnet, indem die Blasformhälften 12, 12' buchartig aufgeklappt und die Bodenform 14 abgesenkt wird. Diese Konfiguration ist in Fig. 2a gezeigt. Während des Blas- oder Streckblasvorgangs hingegen ist die Blasform 10 geschlossen und bildet so eine Hohlform, die die Kontur des herzustellenden Behälters vorgibt. Diese Konfiguration ist als Schnittdarstellung entlang der Trennebene zwischen den Blasformhälften 12, 12' in Fig. 2b gezeigt.

Die Bodenform 14 ist auf einem Bodenformträger 16 montiert und wird in geschlossener Stellung mittels eines Verkrallrings 24, der in geeignete formkomplementäre Konturen von nicht dargestellten Blasformträgern für die Blasformhälften 12, 12' eingreift, gesichert.

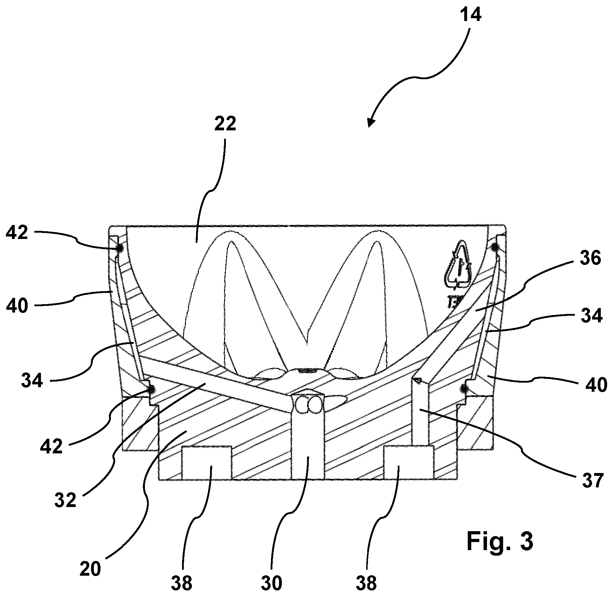

Eine erste Ausführungsform für eine Bodenform 14 gemäß der Erfindung ist in Fig. 3 dargestellt. Die Bodenform 14 umfasst einen Grundkörper 20 mit einer die Bodenkontur des Behälters vorgebenden Formfläche 22. Dabei kann der Grundkörper 20 aus mehreren miteinander verbundenen Bauteilen oder, wie in Fig. 3 gezeigt, aus einem einzigen Bauteil bestehen.

Die erfindungsgemäße Bodenform 14 weist ein Kühlsystem mit miteinander verbundenen Leitungen oder Kanälen für ein Kühlfluid, insbesondere ein flüssiges Kühlfluid wie Wasser mit oder ohne Additive, auf.

Das Kühlfluid wird über einen nicht dargestellten Anschluss bereitgestellt und mittels eines Zentralkanals 30 in Richtung der Formfläche 22 geleitet. Der Zentralkanal 30 endet kurz unterhalb der Formfläche 22, so dass die verbleibende Materialstärke des Grundkörpers 20 noch ausreicht, um die Formfläche 22 gegen den zu erwartenden Blasdruck während des Blasprozesses zu stabilisieren.

Von dem Zentralkanal 30 zweigen mehrere primäre Kühlkanäle 32 ab, von denen in der Schnittdarstellung der Fig. 3 lediglich einer sichtbar ist. Die primären Kühlkanäle 32 verlaufen ausgehend vom Zentralkanal 30 sternförmig nach radial außen nahe an der Formfläche 22, um die über die Formfläche 22 auf die Bodenform 14 übertragene Prozesswärme mittels des Kühlfluids aufzunehmen.

Die primären Kühlkanäle 32 münden in einen ringförmigen Verbindungskanal 34, der am äußeren Umfang des Grundkörpers 20 der Bodenform 14 ausgebildet ist. Der Verbindungskanal 34 ist dabei als Aussparung im Grundkörper 20 ausgebildet, die beispielsweise durch Drehen oder Fräsen sehr einfach herzustellen ist. Die Aussparung ist mittels einer übergestülpten Hülse 40 abgeschlossen, wobei zwischen Grundkörper 20 und Hülse 40 beidseitig der Aussparung umlaufende Dichtungen 42 vorgesehen sind, die den Verbindungskanal 34 gegen die Umgebung abdichten.

Die Hülse 40 ist vorzugsweise aus einem schlecht wärmeleitendem Material, insbesondere einem Kunststoff, ausgebildet, um insbesondere unerwünschte Kondensation von Feuchtigkeit an der Außenseite der Hülse 40 zu verhindern.

Vom Verbindungskanal 34 zweigen mehrere sekundäre Kühlkanäle 36 ab, die das Kühlfluid noch einmal nahe der Formfläche 22 nach radial innen leiten und somit eine weitere Kühlung der Bodenform 14, insbesondere an der Formfläche 22, bewirken. Auch von den sekundären Kühlkanälen 36 ist in der Darstellung von Fig. 3 lediglich einer sichtbar, der beispielsweise gegenüber des einen gezeigten primären Kühlkanals 32 angeordnet ist.

Während die primären Kühlkanäle 32 im Wesentlichen waagerecht verlaufen, sind die sekundären Kühlkanäle 36 schräg angeordnet. Dadurch wird neben einer gleichmäßigeren Durchsetzung des Grundkörpers 20 mit Kühlkanälen 32, 36 auch sichergestellt, dass ausreichend Materialstärke zwischen den Kühlkanälen 32, 36 verbleibt, um die Stabilität des Grundkörpers 20 vor allem im Zentralbereich zu gewährleisten.

Die sekundären Kühlkanäle 36 münden jeweils in Rückführkanäle 37, die die sekundären Kühlkanäle 36 mit einem ringförmigen Sammelkanal 38 verbinden, in dem das Kühlfluid gesammelt und aus der Bodenform herausgeführt wird. Dabei ist es für die Funktionsweise der Erfindung unerheblich, dass die sekundären Kühlkanäle 36 nach Übergang in die Rückführkanäle 37 nicht mehr nach radial innen verlaufen, da dieser Abschnitt bereits relativ weit von der Formfläche 22 entfernt angeordnet ist und entsprechend die Kühlwirkung auf die Formfläche kaum noch beeinflusst wird.

Statt des exemplarischen einzelnen Verbindungskanals 34, der sich über den gesamten Umfang des Grundkörpers 20 erstreckt, ist im Rahmen der Erfindung auch denkbar, dass mehrere Verbindungskanäle 34 vorgesehen sind, die jeweils einen der primären Kühlkanäle 32 mit einem der sekundären Kühlkanäle 36 verbinden. Auch diese mehreren Kühlkanäle können beispielsweise als Aussparungen im Grundkörper 20 ausgebildet sein, die gemeinsam von der Hülse 40 abgedeckt sind. Die Abdichtung der mehreren Verbindungskanäle kann dabei einzeln oder gemeinsam erfolgen.

Für eine gleichmäßige Kühlwirkung sind die Kühlkanäle 32, 36 vorzugsweise in Umfangsrichtung in gleichmäßigem Abstand zueinander angeordnet. Beispielsweise ergibt sich so bei fünf primären Kühlkanälen 32 und fünf sekundären Kühlkanälen 36 in der horizontalen Projektion ein Winkel von 72° zwischen zwei benachbarten primären Kühlkanälen 32. Entsprechendes gilt für die sekundären Kühlkanäle 36. In Umfangsrichtung sind ferner beispielsweise primäre Kühlkanäle 32 und sekundäre Kühlkanäle 36 abwechselnd angeordnet, so dass sich zwischen nebeneinanderliegenden Kühlkanälen 32, 36 in der horizontalen Projektion ein Winkel von 36° ergibt.

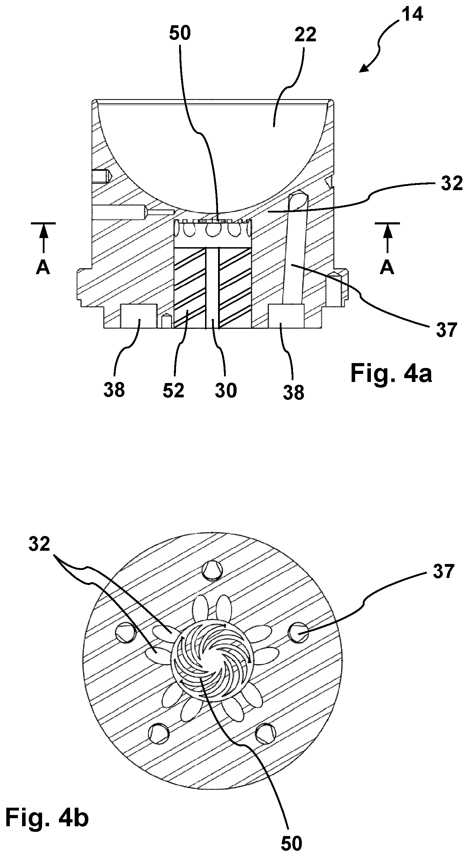

Eine alternative Ausführung einer erfindungsgemäßen Bodenform 14 ist in Fig. 4a und in Fig. 4b dargestellt. Dabei zeigt Fig. 4b eine Schnittdarstellung der erfindungsgemäßen Bodenform 14 entlang der in Fig. 4a bezeichneten Linie A-A. Bei dieser Ausführungsform der Erfindung ist der Zentralkanal 30 in einem Einsatz 52 ausgebildet, der formkomplementär zu einer Bohrung mit entsprechendem Durchmesser von unten in die Bodenform 14 eingesetzt und geeignet abgedichtet ist. Oberhalb des Einsatzes 52 ist ein Drallkörper 50 vorgesehen, der im vorliegenden Beispiel eine spiralförmige Oberfläche aufweist und dadurch die Strömung des Kühlfluids entsprechend beeinflusst bzw. verändert. Dadurch wird nicht nur die zur Wärmeübertragung von Bodenform 14 bzw. Grundkörper 20 zum Kühlfluid vergrößert, sondern auch die Schergeschwindigkeit innerhalb des Kühlfluids erhöht und somit die Wärmeaufnahme durch das Kühlfluid weiter beschleunigt bzw. verbessert.

In dem in Fig. 4a und in Fig. 4b gezeigten Beispiel sind die primären Kühlkanäle 32 als überlappende Doppelbohrung ausgebildet. Dadurch wird im Vergleich zu einer einzelnen Bohrung mit gleichem Querschnitt die Oberfläche der primären Kühlkanäle 32 erhöht.

Die Rückführung des Kühlfluids aus den primären Kühlkanälen 32 zum Sammelkanal 38 erfolgt im Beispiel der Fig. 4 durch vertikale Rückführkanäle 37. Es ist jedoch im Rahmen der Erfindung auch denkbar, zusätzlich einen oder mehrere Verbindungskanäle 34 sowie sekundäre Kühlkanäle 36 vorzusehen, um die Kühlwirkung weiter zu verbessern.

### BEZUGSZEICHEN

- 1: Blasmaschine
- 2: Preformzuführung
- 3: Heizung
- 4: Transfereinrichtung
- 5: Blasrad
- 6: Transfereinrichtung
- 10: Blasform
- 12, 12': Blasformhälften
- 14: Bodenform
- 16: Bodenformträger
- 20: Grundkörper
- 22: Formfläche
- 24: Verkrallring
- 30: Zentralkanal
- 32: primärer Kühlkanal
- 34: Verbindungskanal
- 36: sekundärer Kühlkanal
- 37: Rückführkanal
- 38: Sammelkanal
- 40: Hülse
- 42: Dichtung
- 50: Drallkörper
- 52: Einsatz

## Patentansprüche

1. Blasform (10) zum Herstellen von Behältern in einem Blas- oder Streckblasprozess mit einer Bodenform (14) sowie zwei Formhälften (12, 12'), die gemeinsam eine Formkontur für den Behälter vorgeben, wobei die Bodenform (14) eine Formfläche (22) zum Vorgeben eines Abschnitts der Formkontur sowie ein Leitungssystem für ein Kühlfluid zum Kühlen der Formfläche (22) umfasst, wobei das Leitungssystem einen Zentralkanal (30) zum Zuführen des Kühlfluids, mehrere vom Zentralkanal abzweigende primäre Kühlkanäle (32), die in der Nähe der Formfläche (22) vom Zentralkanal (30) aus nach radial außen verlaufen, sowie einen mit den primären Kühlkanälen (32) in Strömungsverbindung stehenden Sammelkanal (38) zum Sammeln und Abführung des Kühlfluids aufweist, **dadurch gekennzeichnet, dass** das Leitungssystem ferner mehrere sekundäre Kühlkanäle (36) aufweist, die in Strömungsrichtung des Kühlfluids zwischen den primären Kühlkanälen (32) und dem Sammelkanal (38) angeordnet sind und in der Nähe der Formfläche (22) nach radial innen verlaufen, wobei sich diese sekundären Kühlkanäle (36) dadurch auszeichnen, dass das Kühlfluid nach der Passage der primären Kühlkanäle (32) ein weiteres Mal an der zu kühlenden Formfläche (22) vorbeigeführt wird, bevor es im Sammelkanal (38) zusammengeführt und aus der Form (10) geleitet wird.

2. Blasform (10) nach Anspruch 1, **dadurch gekennzeichnet, dass**, die Bodenform (14) einen ringförmigen Verbindungskanal (34) aufweist, in den die primären Kühlkanäle (32) münden und von dem die sekundären Kühlkanäle (36) abzweigen.

3. Blasform (10) nach Anspruch 1, **dadurch gekennzeichnet, dass** die Bodenform (14) mehrere Verbindungskanäle (34) aufweist, wobei jeweils ein Verbindungskanal (34) einen primären Kühlkanal (32) mit jeweils einem sekundären Kühlkanal (36) verbindet.

4. Blasform (10) nach einem der Ansprüche 1 bis 3, **dadurch gekennzeichnet, dass**, der Verbindungskanal (34) bzw. die Verbindungskanäle (34) jeweils durch eine Aussparung in einem Grundkörper (20) der Bodenform (14) gebildet wird bzw. werden, wobei die Aussparung bzw. die Aussparungen mittels einer über den Grundkörper (20) übergeschobene und gegen den Grundkörper (20) abgedichtete Hülse (40) abgedeckt ist bzw. sind, wobei ein Material der Hülse (40) insbesondere einen Kunststoff umfasst.

5. Blasform (10) nach einem der Ansprüche 1 bis 4, **dadurch gekennzeichnet, dass**, die Einmündungen der primären Kühlkanäle (32) in den Verbindungskanal (34) bzw. die Verbindungskanäle (34) gegenüber den Abzweigungen der sekundären Kühlkanäle (36) von dem Verbindungskanal (34) bzw. den Verbindungskanälen (34) in der Höhe und/oder in Umfangsrichtung versetzt angeordnet sind.

6. Blasform (10) nach einem der vorhergehenden Ansprüche, **dadurch gekennzeichnet, dass**, an dem der Formfläche (22) zugewandten Ende des Zentralkanals (30) ein Drallkörper (50) mit einer strömungsverändernden Oberfläche angeordnet ist.

7. Blasform (10) nach Anspruch 6, **dadurch gekennzeichnet, dass**, die strömungsverändernde Oberfläche spiralförmig oder labyrinthartig ausgebildet ist.

8. Blasform (10) nach Anspruch 6 oder 7, **dadurch gekennzeichnet, dass**, die Bodenform (14) einen Grundkörper (20) aufweist, in den der Drallkörper (50) eingearbeitet oder eingesetzt ist, wobei der Zentralkanal (30) in einem in den Grundkörper (20) wenigstens abschnittsweise formkomplementär eingepassten Einsatz (52) ausgebildet ist, wobei eine Stirnseite des Einsatzes (52) mindestens so groß ist wie der Drallkörper (50).

9. Bodenform (14) für eine Blasform (10), wobei die Bodenform (14) nach einem der Ansprüche 1 bis 8 ausgebildet ist.

10. Blasmaschine (1), insbesondere Streckblasmaschine, mit wenigstens einer Blasform (10) nach einem der Ansprüche 1 bis 8, wobei die Blasmaschine (1) insbesondere als Rundläufermaschine konstruiert ist und ein umlaufendes Blasrad (5) aufweist, auf dem die wenigstens eine Blasform (10) angeordnet ist.

## Claims

1. A blow mould (10) for producing containers in a blow mould or stretching process with a mould base (14) and two mould halves (12, 12'), which together specify a mould contour for the container, wherein the mould base (14) comprises a mould surface (22) for specifying a section of the mould contour and a conduit system for a cooling fluid for cooling the mould surface (22), wherein the conduit system comprises a central channel (30) for feeding the cooling fluid, a plurality of primary cooling channels (32) branching off from the central channel, which run radially outwards from the central channel (30) near the moulding surface (22), and a collecting channel (38) for collecting and discharging the cooling fluid, which is connected in a flowing manner to the primary cooling channels (32), **characterized in that** the conduit system also comprises a plurality of secondary cooling channels (36) which are connected in the flow direction of the cooling fluid between the primary cooling channels (32) and the collecting channel (38) and run radially inwards in the vicinity of the mould surface (22), wherein these secondary cooling channels (36) are **characterized in that** the cooling fluid is fed another time at the mould surface (22) to be cooled after passing through the primary cooling channels (32) before it is brought together in the collecting channel (38) and led out of the mould (10).

2. The blow mould (10) according to Claim 1, **characterized in that** the mould base (14) comprises a ring-shaped connecting channel (34) into which the primary cooling channels (32) open and from which the secondary cooling channels (36) branch off.

3. The blow mould (10) according to Claim 1, **characterized in that** the mould base (14) comprises a plurality of connecting channels (34), wherein one connecting channel (34) respectively connects a primary cooling channel (32) with a secondary cooling channel (36).

4. The blow mould (10) according to any one of the Claims 1 to 3, **characterized in that** the connecting channel (34) or the connecting channels (34) are each formed by a recess in a main body (20) of the mould base (14), wherein the recess or recesses are covered by means of a sleeve (40) pushed over the main body (20) and sealed against the main body (20), wherein one material of the sleeve (40) comprises, in particular, a plastic.

5. The blow mould (10) according to any one of the Claims 1 to 4, **characterized in that** the junctions of the primary cooling channels (32) into the connecting channel (34) or the connecting channels (34) are offset in height and/or circumferential direction in relation to the branches of the secondary cooling channels (36) from the connecting channel (34) or the connecting channels (34).

6. The blow mould (10) according to any one of the preceding claims, **characterized in that** a swirl body (50) with a flow-changing surface is arranged at the end of the central channel (30) facing the mould surface (22).

7. The blow mould (10) according to Claim 6, **characterized in that** the flow-changing surface is spiral in shape or labyrinth-like.

8. The blow mould (10) according to Claim 6 or 7, **characterized in that** the mould base (14) comprises a main body (20) into which the swirl body (50) is incorporated or inserted, wherein the central channel (30) is formed in an insert (52) fitted into the main body (20) at least in sections in a form-complementary manner, wherein one face of the insert (52) is at least as large as the swirl body (50).

9. A mould base (14) for a blow mould (10), wherein the mould base (14) is formed according to any one of the Claims 1 to 8.

10. A blow moulding machine (1), in particular, a stretch blow moulding machine, comprising at least one blow mould (10) according to any one of the Claims 1 to 8, wherein the blow moulding machine (1) is designed, in particular, as a rotary machine and has a circumferential blowing wheel (5) on which at least one blow mould (10) is arranged.

## Revendications

1. Moule de soufflage (10) pour la fabrication de récipients au moyen d'un processus de soufflage ou de soufflage-étirage avec un moule de fond (14) ainsi que deux demi-moules (12, 12') qui définissent conjointement un contour de forme du récipient, le moule de fond (14) comprenant une surface (22) du moule définissant une section du contour de forme ainsi qu'un système de conduits pour un fluide de refroidissement de la surface (22) du moule, le système de conduits présentant un canal central (30) d'adduction du fluide de refroidissement, plusieurs canaux de refroidissement primaires (32) dérivés du canal central qui, partant du canal central (30) à proximité de la surface (22) du moule, s'étendent radialement vers l'extérieur, ainsi qu'un canal collecteur (38) en liaison d'écoulement avec les canaux de refroidissement primaires (32) pour collecter et évacuer le fluide de refroidissement, **caractérisé en ce que** le système de conduits présente en outre plusieurs canaux de refroidissement secondaires (36) agencés dans le sens d'écoulement du fluide de refroidissement entre les canaux de refroidissement primaires (32) et le canal collecteur (38) et qui, à proximité de la surface (22) du moule, s'étendent radialement vers l'intérieur, ces canaux de refroidissement secondaires (36) se distinguant par le fait que le fluide de refroidissement, après son passage par les canaux de refroidissement primaires (32) est à nouveau conduit à proximité de la surface (22) du moule à refroidir avant de rejoindre le canal collecteur (38) pour être conduit hors du moule (10).

2. Moule de soufflage (10) selon la revendication 1, **caractérisé en ce que** le moule de fond (14) présente un canal de liaison annulaire (34) dans lequel débouchent les canaux de refroidissement primaires (32) et duquel partent les canaux de refroidissement secondaires (36).

3. Moule de soufflage (10) selon la revendication 1, **caractérisé en ce que** le moule de fond (14) présente plusieurs canaux de liaison (34), chaque canal de liaison (34) reliant respectivement un canal de refroidissement primaire (32) à respectivement un canal de refroidissement secondaire (36).

4. Moule de soufflage (10) selon l'une des revendications 1 à 3, **caractérisé en ce que** le canal de liaison (34) ou les canaux de liaison (34) est (sont) respectivement formé(s) par un évidement dans un corps de base (20) du moule de fond (14), l'évidement ou les évidements étant recouvert(s) d'un manchon (40) chevauchant le corps de base (20) et étanchéifié par rapport à celui-ci, un matériau du manchon (40) comportant notamment une matière plastique.

5. Moule de soufflage (10) selon l'une des revendications 1 à 4, **caractérisé en ce que** l'agencement des embouchures des canaux de refroidissement primaires (32) dans le canal de liaison (34) ou dans les canaux de liaison (34) est décalé en hauteur et/ou sur la périphérie par rapport aux dérivations des canaux de refroidissement secondaires (36) du canal de liaison (34) ou des canaux de liaison (34).

6. Moule de soufflage (10) selon l'une des revendications précédentes, **caractérisé en ce qu'**un corps tourbillonnaire doté d'une surface modifiant l'écoulement est agencé à l'extrémité du canal central (30) du côté de la surface (22) du moule.

7. Moule de soufflage (10) selon la revendication 6, **caractérisé en ce que** la surface modifiant l'écoulement a une forme de spirale ou de labyrinthe.

8. Moule de soufflage (10) selon la revendication 6 ou 7, **caractérisé en ce que** le moule de fond (14) présente un corps de base (20) dans lequel est intégré ou inséré le corps tourbillonnaire (50), le canal central (30) étant formé dans un insert (52) de forme partiellement au moins complémentaire à celle du corps de base (20), une face frontale de l'insert (52) étant au moins aussi grande que le corps tourbillonnaire (50).

9. Moule de fond (14) pour un moule de soufflage (10), le moule de fond (14) étant façonné selon l'une des revendications 1 à 8.

10. Machine de moulage par soufflage (1), notamment une machine de soufflage-étirage avec au moins un moule de soufflage (10) selon l'une des revendications 1 à 8, la machine de moulage par soufflage (1) étant notamment conçue comme machine rotative présentant une roue de soufflage (5) en rotation sur laquelle est agencé au moins un moule de soufflage (10).
